# EUROPEAN PATENT APPLICATION

(11) **EP 2 047 750 A1**
(43) Date of publication of application: **15.04.2009**
(21) Application number: 07381068.1
(22) Date of filing: 08.10.2007
(51) Int. Cl.: A21C 3/04, A21C 11/20

(54) **A machine for producing yeast noodles**

(71) Applicant: Provator S. A., 08840 Viladecans (Barcelona) (ES)
(72) Inventor: Ortiz Mochales, José María, 08840, Viladecans (Barcelona) (ES)
(74) Representative: Barlocci, Anna

(57) **Abstract**

The machine comprises a mixer (30) for mixing the yeast with at least one additive and an extruder (40) with a worm screw (41) for the extrusion of the mixture; the mixer (30) comprises at least two parallel shafts (31,32), mounted inside a hopper (11) horizontally and in such a way that they may rotate, wherein at least part of the worm screw (41) of the extruder (40) is arranged in the bottom part of said housing (11), below the shafts (31,32) of the mixer (30), and extends parallel to said shafts. The mixing and kneading of the yeast and additives is performed satisfactorily in a single machine avoiding excessive heating of the yeast, whereby high quality yeast noodles can be obtained.

## Description

The present invention relates to a machine for the production of yeast noodles which allows obtaining a high quality product with minimum waste.

### BACKGROUND OF THE INVENTION

The process of production of dry instant yeast involves mixing yeast with a number of additives, extruding the mixture to form very thin noodles, and then drying the noodles.

A known kind of machine for producing yeast noodles was adapted from the field of the meat industry, and usually comprises a housing with a helical screw and a number of perforated plates; the rotation of the helical screw and the passage through the holes of the plates causes the yeast and additives to mix together and advance towards an extrusion outlet.

These known machines have the drawback that the mixture is obtained by applying high pressure and friction; this causes heating of the yeast and thus plasticizing of the mixture, resulting in a product of poor quality.

Another known process for mixing and extruding yeast noodles involves two separate steps: yeast and additives are first mixed in a previous mixing step, and then fed to an extruder for an extrusion step through a perforated plate to form the yeast noodles.

This process is not so aggressive for the yeast, but in this case the result of the mixing operation between the yeast and additives is not entirely satisfactory.

### SUMMARY OF THE INVENTION

The aim of the present invention is to provide a machine for the production of yeast noodles which solves the above problems and obtains a high quality product, by achieving a very homogeneous mixture without causing excessive heating of the yeast.

According to present the invention, a machine for producing yeast noodles comprises a mixer for mixing the yeast with at least one additive and an extruder with a worm screw for the extrusion of the mixture, and is characterized in that the mixer comprises at least two parallel shafts, mounted inside a hopper horizontally and in such a way that they may rotate, wherein at least part of the worm screw of the extruder is arranged in the bottom part of said hopper, below the shafts of the mixer, and extends parallel to said shafts.

With this configuration, the mixing and kneading of the yeast and additives is performed satisfactorily in a single machine, avoiding at the same time high pressures as well as friction and heating of the yeast, such that high quality yeast noodles can be obtained.

Further advantages of the invention are related to the integration in a single machine of the operations of mixing, kneading and extrusion of the yeast; this simplifies the production and reduces the amount of yeast present in the production cycle.

The dependent claims relate to further advantageous features of embodiments of the invention.

### BRIEF DESCRIPTION OF THE DRAWINGS

Particular embodiments of the present invention will be described in the following, only by way of non-limiting example, with reference to the appended drawings, in which:
figure 1 is a schematic side view of a machine according to an embodiment of the invention;
figure 2 is a side view similar to that of figure 1, where the mixing hopper and the extrusion area of the machine have been cut away to show the mixer and extruder;
figure 3 is a schematic front view of the machine, taken from the right side of figure 1, with the extrusion head gate of the extruder in closed position and with the housing partly cut away to show the position of the mixer;
figure 4 is similar to figure 3, with the extrusion head gate in open position;
figures 5a and 5b show enlarged details of the extruder cylinder in longitudinal cross section and in front view, respectively; and
figure 6 illustrates the operation of the machine.

### DESCRIPTION OF EMBODIMENTS OF THE INVENTION

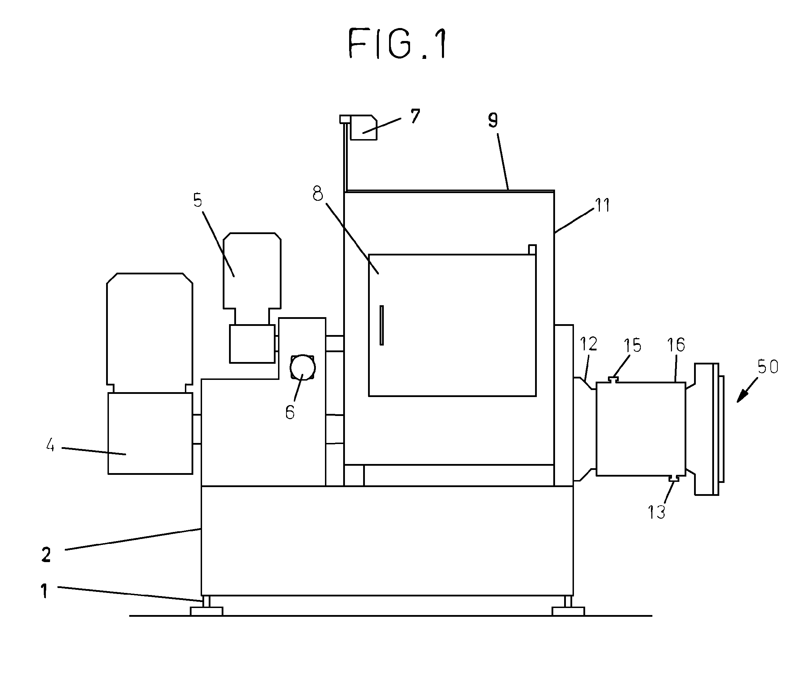

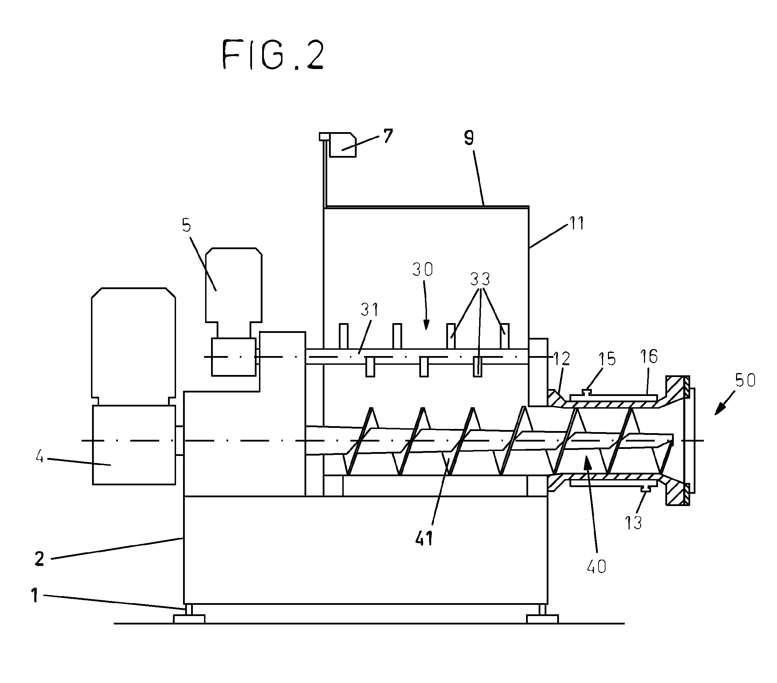

An embodiment of the machine for producing yeast noodles according to the present invention comprises, as shown in figures 1 and 2, a housing or hopper 11 mounted on a frame 2 which is supported on a number of supporting and levelling legs 1, which may be replaced by a wheeling system to move the machine sideways.

The machine comprises a number of security and control features, such as an emergency stop button 6 (figure 1), a side door 8 for accessing the inside of the housing 11 for cleaning purposes, a lid 9 covering the upper opening of the housing or hopper 11, and associated security detectors (not shown) to stop the operation of the machine if the door 8 or lid 9 are opened.

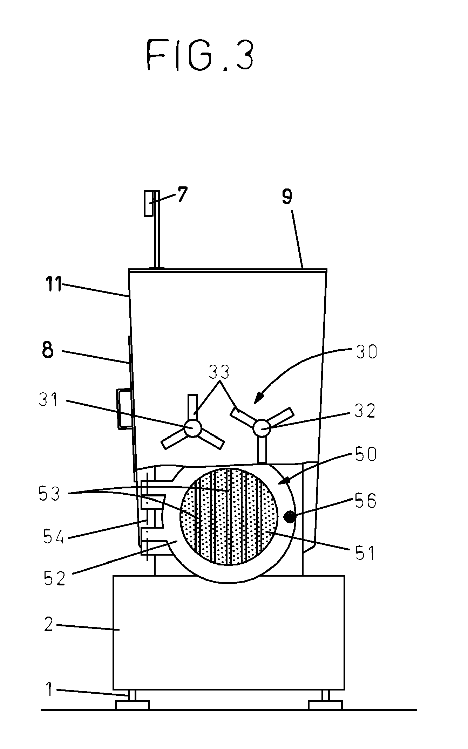

Inside the housing or hopper 11 are mounted a mixer 30 for mixing the yeast with the additives, and an extruder 40 with a worm screw 41. The mixer 30 comprises two parallel horizontal shafts 31, 32 (see figures 2 and 3), each provided with a number of mixing paddles 33; the worm screw 41 is parallel to the mixer shafts 31, 32, and arranged at the bottom of the housing 11, below the mixer 30. The worm screw 41 thus causes the advance of the yeast mixture that moves by gravity from the mixer 30 down to the worm screw region.

The shafts 31 and 32 of the mixer 30 are generally cylindrical and the paddles 33 can be substantially flat, in the form of rods, curved, or a combination thereof (the same shape for all the paddles, or different for different paddles), and can be arranged along the shafts in several ways, depending on the effect to be obtained. Figures 2 and 3 show a layout that has proved to perform a satisfactory mixing action. The paddles on the two shafts 31, 32 are arranged alternated along the shaft, to avoid interfering.

The expression "hopper" as used herein in not intended to indicate a housing with a particular shape; on the contrary, it is foreseen that the hopper 11 may have any shape suitable for the operation of the mixer 30 and extruder 40.

As shown in figures 1 and 2, the machine is provided with a motor 4 for setting in rotation the worm screw 41 of the extruder 40, and, in this exemplary embodiments, two motors 5 (only one of them visible in the drawings) for the mixer shafts 31 and 32, such that the speed and direction of rotation of the two shafts can be varied independently, and each shaft can be rotated in the most suitable direction.

The extrusion cylinder 12 of the extruder 40 is removably attached to the housing 11 and surrounds a downstream section of the worm screw 41 that extends beyond the shafts 31, 32 of the mixer 30, in order to form a compression region.

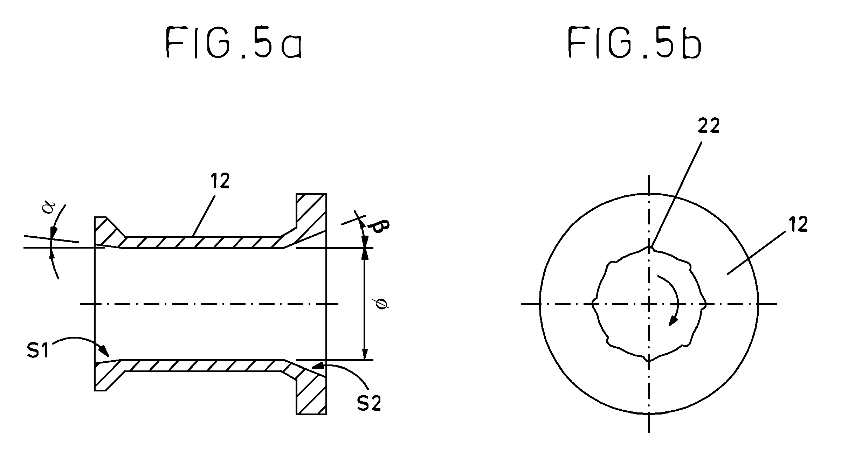

The extrusion cylinder 12 is shown with more detail in figures 5a and 5b. As shown in the view of figure 5a, it has an inner diameter Φ which conditions the production capacity of the machine, and frustoconical sections S1 and S2 at its two ends.

At the upstream end of the cylinder 12 (left hand side of the cylinder in figures 2 and 5a), where the yeast mixture enters the cylinder, there is a frustoconical section S1 that narrows or tapers towards the right, i.e. in the direction of extrusion, with an angle shown as α in the drawing. This reduction of the inner diameter of the cylinder also determines the reduction of the outer diameter of the worm screw 41 between the first section (where it causes the advance of the yeast mixture towards the extrusion cylinder) and the second section, where it compresses the yeast mixture in a compression region inside the extrusion cylinder.

The effect of this reduction in the outer diameter of the worm screw and of the inner diameter of the extrusion cylinder will be described later on, in relation with the operation of the machine.

At the downstream end of the extrusion cylinder (the right hand side of the cylinder in figures 2 and 5a), the cylinder may comprise another frustoconical section S2 that widens in the direction of extrusion, with an angle shown in the drawings as β. This widening allows the pressure of the yeast in the extrusion region to be adjusted, when the extrusion cylinder is manufactured.

Surrounding the extrusion cylinder there is a cooling chamber 16 (see figures 1 and 2), in which a cooling medium such as cold water flows from an inlet 13 to an outlet 15, in countercurrent with respect to the advance of the yeast mixture in the cylinder. Cooling the cylinder 12 assists in maintaining stable extrusion conditions by reducing the temperature of the yeast which enters in contact with cylinder 12 in the extrusion region; this temperature could otherwise raise to a high level as a consequence of the strong generation of heat in this region due to compression of the yeast and friction against the surface of the cylinder, hindering the proper extrusion operation.

As shown in figure 5b, the inner surface of the cylinder 12 is provided with a number of longitudinal grooves 22; these grooves are useful to avoid the rotation of the yeast together with the worm screw, which also assists in reducing friction and therefore heat generation inside the cylinder. The arrow in figure 5b shows the direction of rotation of the worm screw 41 inside the cylinder 12.

The worm screw 41 of the extruder 40 has a conical core or shaft, which narrows in the direction of extrusion, with the screw wound around the core. Such narrowing of the core is useful to be able to support the worm screw firmly at the upstream end, where it can be held in an appropriate bearing (not shown), and make the assembly lighter towards the extrusion outlet.

Additionally, to help enduring the radial loading generated by the screw during extrusion, the extrusion cylinder 12 is made of bronze, in order to work as a bearing of big dimensions, inside which the outer edge of the worm screw 41 slides and is guided. Grooves 22 are machined inside the bronze cylinder 12.

On the free, downstream end of the extrusion cylinder 12 is removably mounted a extrusion or moulding head 50 (see figures 1 to 4) comprising a thin perforated extrusion plate 51, through which the yeast mixture is forced by the worm screw 41 to form the yeast noodles.

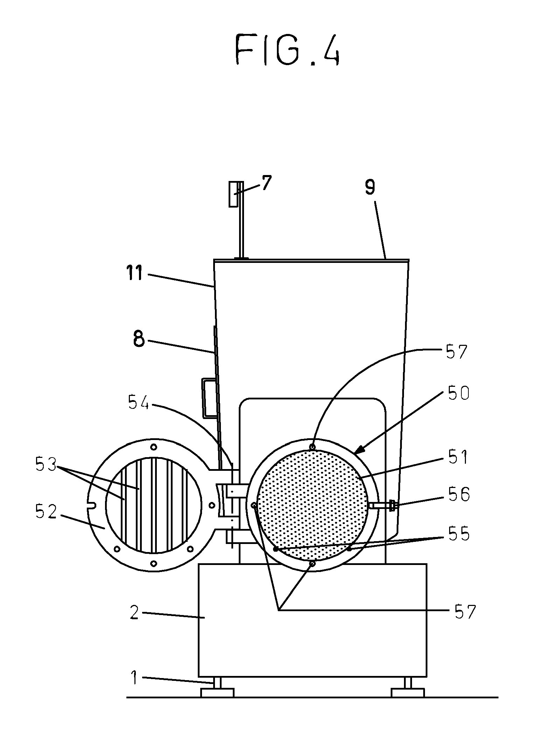

More details of the extrusion head 50 can be seen in figures 3 and 4: the plate 51 is held in place by a extrusion head gate 52 comprising a frame and a plurality of vertical bars 53 which can withstand the extrusion forces that act on the perforated plate 51 and prevent the plate from suffering excessive deformations.

The extrusion head gate 52 is hinged to the extrusion cylinder 12 by means of a pin 54, such that it can be swung between the operative, locking position shown in figure 3 and the open position shown in figure 4. The gate 52 doesn't need to be lifted using an external device and it can be opened and closed easily to replace the extrusion plate 51. This of course reduces remarkably downtimes which are required for maintenance purposes.

As shown in figure 4, two pins 55 are provided to support the plate 51 in position, avoiding the need to hold it manually while the gate 52 is open. Once closed, the gate 52 can be quickly held in operative position by a fast tightening screw 56, and then three conventional screws 57 are tightened to ensure the required resistance. It will be understood that the structure of the extrusion head 50 allows the plate 51 to be easily and quickly replaced by a single operator.

The size of the perforations on the plate 51 depends on the diameter of the noodles to be extruded in each case: for example, a diameter of about 0.5 mm is appropriate for producing instant yeast noodles, while for producing active dry yeast a larger diameter is usually employed.

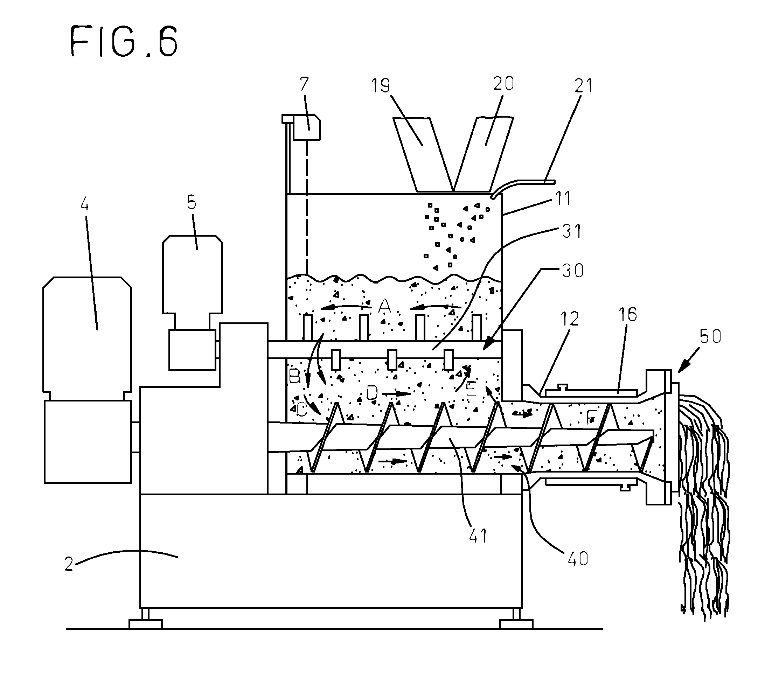

The operation of the machine will be described in the following, with reference mainly to figure 6, in which the arrows indicate the flow of the yeast mixture.

The housing or hopper 11 is continuously fed with the yeast and the desired additives through feeding conduits, usually external to the machine; for example conduit 19 can be used to feed yeast, conduit 20 for solid additives and pipe 21 for liquid additives.

The proportions of the different components are adjusted and regulated at all times by an appropriate controller, which can be embodied as a device separate from the machine.

The flow of the yeast and additives into the housing 11, as well as the speed of the mixer 30 and the speed of the extruder 40 must be controlled to obtain the desired result in each different circumstance. A level detector 7 allows to detect accurately the filling level and its variation trend. Based on this information, the automation system incorporated on the machine allows to adjust the rotation speed of screw 41, so that the amount of yeast in the housing 11 to be maintained at the appropriate level slightly above the paddles 33 of the mixer 30.

As shown in figure 6, the yeast and additives are fed to the right hand side of the housing or hopper 11 in figure 6, i.e. at the end of the mixer that is downstream in the direction of extrusion.

Once the new yeast and additives fall on the yeast already contained in the hopper 11, the components start being mixed by the combined rotation of the paddles 33 of the shafts 31, 32 of the mixer 30; at the same time, a kneading action is effected on the mixture, which as a consequence adopts the appropriate plasticity and other physical properties that make it suitable for its compression and extrusion.

The mixture tends to move under the effect of gravity towards the lower part of the hopper, where the first section of the worm screw 41 causes its advance towards the extrusion cylinder 12.

In practice, as the first section of the worm screw 41 advances the mixture in the direction of extrusion (towards the right of the figure), it happens that in a region C at the left end of the worm screw the amount and pressure of the mixture tends to decrease, and therefore the yeast mixture that lies above it, in region B, tends to move downwards to fill the only space available, in region C. There is therefore a circulation of yeast mixture along regions A, B, C and D, as shown by the arrows in figure 6; in the region A above the mixer, the yeast has a tendency to travel in the direction towards the left in figure 6.

Furthermore, due to the severe reduction in the passage available for the mixture through the extrusion plate 51, the amount of mixture carried along by the first section of the worm screw 41 is larger than the amount that can be pressed into the compression region F in the extrusion cylinder 12; as a result, and by virtue of the decrease of the outer diameter of the worm screw and of the inner diameter of the extrusion cylinder 12 in region S1 of figure 5a, the mixture that cannot enter the extrusion cylinder 12 is pushed out and upwards at a region E at the entrance of the extrusion cylinder 12, and returns towards the mixer 30 near the right end of the shafts 31, 32.

In fact, due to the geometry of the inlet to the extrusion cylinder, the yeast goes back towards the housing through the small free space remaining between the frustoconical section S1, at the inlet of the extrusion cylinder 12 and the edge of the worm screw 41, whereby the upward reflux or return of yeast in region E occurs in the form of compressed sheets or laminar portions of yeast mixture; this has been found to cause a convenient "lamination" effect which improves the efficiency of the mixing operation.

In the process, a significant amount of the yeast mixture that is mixed and carried along part of the worm screw 41 is later returned towards the mixer 30 to travel again through regions A, B, C, D and E, before it reaches the compression region F; therefore, the yeast mixture undergoes several subsequent mixing operations. In embodiments of the invention, at least 50% of the yeast mixture carried by the worm screw returns towards the mixer; in some embodiments, only about a third of the yeast mixture that is carried along the worm screw enters the extrusion cylinder, and about two thirds return towards the mixer.

In practice it has been found that this circulation of the yeast mixture, and especially the return of a significant proportion of the yeast mixture towards the mixer after it has been carried along the first section of the worm screw 41, increases the mixing action and obtains a very homogeneous mixture.

Furthermore, this is obtained without heating the mixture significantly and therefore without damaging the yeast, which can be then extruded into solid yeast noodles, with very little dust and waste. It is believed that this advantage is due to the layout of the mixer and extruder, which allows the mixture to be subject to a thorough but gentle mixing action in several successive steps, in which high pressures and high friction forces are avoided.

After undergoing this process, the yeast mixture that enters the compression region F in the extrusion cylinder 12 is further advanced by the last section of the worm screw 41, compressed and forced through the perforated plate 51 to form the yeast noodles and complete the operation.

In summary, the kneading and mixing of the yeast with the additives is performed continuously from when it is fed into the housing 11, all the way through the mixer and the first section of the worm screw, including a degree of reflux along the same path, then upon entry into the compression chamber F and also in the chamber itself, up to extrusion in the form of noodles through the perforated plate 51.

## Claims

1. A machine for producing yeast noodles, comprising a mixer (30) for mixing the yeast with at least one additive and an extruder (40) with a worm screw (41) for the extrusion of the mixture, **characterized in that** the mixer (30) comprises at least two parallel shafts (31,32), mounted inside a hopper (11) horizontally and in such a way that they may rotate, wherein at least part of the worm screw (41) of the extruder (40) is arranged in the bottom part of said hopper (11), below the shafts (31,32) of the mixer (30), and extends parallel to said shafts.

2. A machine as claimed in claim 1, wherein a downstream section of the worm screw (41) of the extruder (40), in the direction of extrusion, extends beyond the shafts (31,32) of the mixer and is surrounded by an extrusion cylinder (12).

3. A machine as claimed in claim 2, wherein said extrusion cylinder (12) is removably attached to the housing (11).

4. A machine as claimed in any of claims 2 or 3, wherein said extrusion cylinder (12) comprises an upstream end with a frustoconical section (S1) that tapers in the direction of extrusion.

5. A machine as claimed in any of claims 2 to 4, wherein said extrusion cylinder (12) comprises a downstream end with a frustoconical section (S2) that widens in the direction of extrusion.

6. A machine as claimed in any of claims 2 to 5, wherein the extrusion cylinder (12) is made of bronze.

7. A machine as claimed in any of claims 2 to 6, wherein said extrusion cylinder (12) comprises on at least part of its inner surface a plurality of grooves (22) extending in longitudinal direction.

8. A machine as claimed in any of claims 2 to 7, further comprising a perforated plate (51), provided with a plurality of perforations for the extrusion of yeast noodles, wherein said plate (51) is arranged at a downstream end of said extrusion cylinder (12), in the direction of extrusion.

9. A machine as claimed in claim 8, further comprising a extrusion head gate (52) removably mounted at the downstream end of the extrusion cylinder (12) to hold the perforated plate (51) in position during operation.

10. A machine as claimed in claim 9, wherein said extrusion head gate (52) is pivotably mounted on the extrusion cylinder (12) by means of a hinge (54).

11. A machine as claimed in any of the preceding claims, wherein said worm screw (41) is cylindrical and has a conical shaft which tapers towards its downstream end in the direction of extrusion.

12. A machine as claimed in any of the preceding claims, wherein each shaft (31,32) of the mixer (30) is provided with a plurality of mixing paddles (33).

13. A machine as claimed in any of the preceding claims, further comprising means (5) for rotating each shaft (31,32) of the mixer (30) at a desired speed.

14. A machine as claimed in any of the preceding claims, wherein the housing comprises a hopper (11) with a semi-cylindrical bottom which surrounds the lower part of the worm screw (41).
